# EUROPÄISCHE PATENTANMELDUNG

(11) **EP 4 671 582 A1**
(43) Veröffentlichungstag der Anmeldung: **31.12.2025**
(21) Anmeldenummer: 25184907.1
(22) Anmeldetag: 24.06.2025
(51) Int. Cl.: F16K 27/00

(54) **VENTILKÖRPER, VENTILBLOCK UND VERFAHREN**

(30) Priorität: 28.06.2024 DE 102024118314
(71) Anmelder: GEMÜ Gebr. Müller Apparatebau GmbH & Co. Kommanditgesellschaft, 74653 Ingelfingen (DE)
(72) Erfinder: Johmann, Teresa, 74889 Sinsheim (DE); Sifer, Kevin, 74523 Schwäbisch Hall (DE)
(74) Vertreter: DREISS Patentanwälte PartG mbB

(57) **Zusammenfassung**

Es wird ein modularer erster Ventilkörper (100a) für ein Prozessventil vorgeschlagen. Der Ventilkörper (100a) umfasst wenigstens einen inneren Fluidkanal (102), welcher wenigstens zwei Öffnungen des Ventilkörpers (100a) fluidführend miteinander verbindet. Wenigstens eine der Öffnungen ist von einem Modulanschluss (200) umgeben, der mit einem Gegenmodulanschluss eines weiteren Ventilkörpers verbindbar ist.

## Beschreibung

Die Erfindung betrifft Fortschritte auf dem Gebiet der Prozessventiltechnik.

Beispielsweise besteht bei im Markt eingesetzten Ventilen im Anwendungsbereich Waschmitteldosierung ein hoher Wartungsaufwand. Zum Tauschen einzelner Antriebe müssen die äußeren Antriebe mitabmontiert werden und das passende Werkzeug muss vorhanden sein. Der Kunde muss insbesondere verschieden große Verteilerleisten bzw. Ventilblöcke auf Lager halten, um eine Wartung selbstständig durchführen zu können.

Die der Erfindung zugrundeliegenden Probleme werden durch modulare Ventilkörper gemäß dem Anspruch 1 und einem nebengeordneten Anspruch sowie durch einen Ventilblock gemäß einem weiteren nebengeordneten Anspruch und durch ein Verfahren gemäß einem anderen nebengeordneten Anspruch gelöst.

Ein erster Aspekt der Beschreibung betrifft den folgenden Gegenstand: Ein modularer erster Ventilkörper für ein Prozessventil umfassend wenigstens einen inneren Fluidkanal, welcher wenigstens zwei Öffnungen des Ventilkörpers fluidführend miteinander verbindet; und wenigstens einen eine der Öffnungen umgebenden Modulanschluss, wobei der Modulanschluss umfasst: wenigstens eine Freisparung, durch welche wenigstens ein Verriegelungselement eines Gegenmodulanschlusses eines zweiten Ventilkörpers parallel zu einer Steckachse in eine gedachte zur Steckachse lotrechte Drehverriegelungsebene bewegbar ist; und wenigstens eine in der Drehverriegelungsebene verlaufende Verriegelungsnut, in die das zugeordnete wenigstens eine Verriegelungselement nach einer relativen Rotation des Modulanschlusses und des Gegenmodulanschlusses zueinander eingreift, um den ersten und zweiten Ventilkörper entlang der Steckachse zueinander festzulegen.

Der bereitgestellte Ventilkörper kann werkzeuglos durch eine einfache Dreh-SteckBewegung mit einem weiteren Ventilkörper verbunden werden. So können Ventilblöcke mit unterschiedlichen Anzahlen von Ventilkörpern ab Werk oder auch beim Kunden zusammengestellt werden. Damit wird auch die Wartung vereinfacht, da eine werkzeuglose Demontage erfolgen kann. Der Produktionsaufwand wird durch die modulartige Aneinanderreihbarkeit der Ventilkörper zu wunschgemäßen Ventilblöcken reduziert, da nur noch eine oder wenige Varianten eines Ventilkörpers produziert werden müssen. Weitergehend vereinfacht sich die Lagerhaltung beim Hersteller und Kunden durch die geschaffene Modularität.

Ein vorteilhaftes Beispiel zeichnet sich durch wenigstens einen Dichtabschnitt aus, welcher bei einem relativen Aufeinanderzubewegen des ersten Ventilkörpers und des zweiten Ventilkörpers entlang der gedachten Steckachse in Kontakt mit einem Gegendichtabschnitt des zweiten Ventilkörpers kommt.

Durch das Inkontaktkommen des Dichtabschnitts und des Gegendichtabschnitts wird eine fluiddichte Abdichtung des durch Verbindung der beiden Fluidkanäle der beiden Ventilkörper entstehenden Fluidkanals nach außen erreicht.

Ein vorteilhaftes Beispiel zeichnet sich durch einen Dichtabschnitt aus, welcher sich zwischen der dem Modulanschluss zugeordneten Öffnung und dem Modulanschluss befindet, und welcher bei einem relativen Aufeinanderzubewegen des ersten Ventilkörpers und des zweiten Ventilkörpers entlang der gedachten Steckachse in Kontakt mit einem Gegendichtabschnitt des zweiten Ventilkörpers kommt.

Ein vorteilhaftes Beispiel zeichnet sich dadurch aus, dass eine Mehrzahl von Verriegelungsnuten, insbesondere vier Verriegelungsnuten, in einer Umfangsrichtung, insbesondere äquidistant, zueinander beabstandet sind.

Vorteilhaft wird damit ermöglicht, dass in Abhängigkeit von der Anzahl der Verriegelungsnuten bzw. Verriegelungselemente verschiedene Winkelpositionen zwischen den Ventilkörpern einstellbar sind. Damit kann insbesondere ein Anschlussbereich des Ventilblocks für einen Antrieb oder ein weiterer Fluidanschluss in verschiedenen Positionen in Bezug zum benachbarten Ventilkörper angeordnet werden. Es erhöhen sich damit die Freiheitsgrade bei der Ausgestaltung des modular zusammenstellbaren Ventilblocks umfassend mehrere modulare Ventilkörper.

Ein vorteilhaftes Beispiel zeichnet sich dadurch aus, dass sich an die dem Modulanschluss zugeordnete Öffnung ein in den Fluidkanal eingebrachtes Innengewinde anschließt.

Vorteilhaft wird damit - zusätzlich zu dem Modul- oder Gegenmodulanschluss - eine weitere Anschlussmöglichkeit geschaffen, um eine Fluidverbindung mit dem Ventilkörper herzustellen.

Ein vorteilhaftes Beispiel zeichnet sich dadurch aus, dass ein Verriegelungsnutenboden der wenigstens einen Verriegelungsnut ein jeweiliges Rastprofil aufweist, um mit einer zugeordneten Rastnase des wenigstens einen Verriegelungselements des Gegenmodulanschlusses des zweiten Ventilkörpers wenigstens eine oder mehrere Rastpositionen des ersten und zweiten Ventilkörpers zueinander zu definieren.

Vorteilhaft wird dem Monteur durch die wenigstens eine Rastposition eine haptische Rückmeldung über das baldige Erreichen der finalen Verriegelungsposition gegeben.

Ein vorteilhaftes Beispiel zeichnet sich dadurch aus, dass der Begrenzungsanschlag wenigstens eine der Verriegelungsnuten endseitig begrenzt.

Vorteilhaft kann damit eine Rastposition definiert werden, in der eine weitere Verdrehung der Ventilkörper zueinander nicht mehr möglich ist. Damit wird für den Monteur eine haptische Rückmeldung für das Erreichen der Endposition bereitgestellt.

Ein zweiter Aspekt der Beschreibung betrifft den folgenden Gegenstand: Ein modularer zweiter Ventilkörper für ein Prozessventil umfassend wenigstens einen inneren Fluidkanal, welcher wenigstens zwei Öffnungen des Ventilkörpers miteinander verbindet; und wenigstens einen eine der Öffnungen umgebenden Gegenmodulanschluss, wobei der Gegenmodulanschluss umfasst: wenigstens ein Verriegelungselement, welches durch eine Freisparung eines Modulanschlusses eines modularen ersten Ventilkörpers parallel zu einer Steckachse in eine gedachte zur Steckachse lotrechte Drehverriegelungsebene bewegbar ist, wobei das wenigstens eine Verriegelungselement nach einer relativen Rotation des Gegenmodulanschlusses und des Modulanschlusses zueinander in eine zugeordnete Verriegelungsnut des Modulanschlusses eingreift, um den ersten und zweiten Ventilkörper entlang der Steckachse zueinander festzulegen.

Der bereitgestellte Ventilkörper kann werkzeuglos durch eine einfache Dreh-SteckBewegung mit einem weiteren Ventilkörper verbunden werden. So können Ventilblöcke mit verschiedenen Anzahlen von Ventilkörpern auch beim Kunden zusammengestellt werden. Damit wird auch die Wartung vereinfacht, da eine werkzeuglose Demontage erfolgen kann. Der Produktionsaufwand wird durch die modulartige Aneinanderreihbarkeit der Ventilkörper zu wunschgemäßen Ventilblöcken reduziert, da nur noch eine oder wenige Varianten eines Ventilkörpers produziert werden müssen. Weitergehend vereinfacht sich die Lagerhaltung beim Hersteller und Kunden durch die geschaffene Modularität.

Ein vorteilhaftes Beispiel zeichnet sich durch wenigstens einen Gegendichtabschnitt aus, welcher bei einem relativen Aufeinanderzubewegen des ersten Ventilkörpers und des zweiten Ventilkörpers entlang der gedachten Steckachse in Kontakt mit einem Dichtabschnitt des ersten Ventilkörpers kommt, um eine fluiddichte Abdichtung nach außen bereitzustellen.

Durch das Inkontaktkommen des Dichtabschnitts und des Gegendichtabschnitts wird eine fluiddichte Abdichtung des durch Verbindung der beiden Fluidkanäle der beiden Ventilkörper entstehenden Fluidkanals nach außen erreicht.

Ein vorteilhaftes Beispiel zeichnet sich dadurch aus, dass eine Mehrzahl von Verriegelungselementen, insbesondere vier Verriegelungselemente, in Umfangsrichtung äquidistant zueinander beabstandet sind.

Vorteilhaft wird damit ermöglicht, dass in Abhängigkeit von der Anzahl der Verriegelungsnuten bzw. Verriegelungselemente verschiedene Winkelpositionen zwischen den Ventilkörpern einstellbar sind. Damit kann insbesondere ein Anschlussbereich des Ventilblocks für einen Antrieb oder ein weiterer Fluidanschluss in verschiedenen Positionen in Bezug zum benachbarten Ventilkörper angeordnet werden. Es erhöhen sich damit die Freiheitsgrade bei der Ausgestaltung des modular zusammenstellbaren Ventilblocks umfassend mehrere modulare Ventilkörper.

Ein vorteilhaftes Beispiel zeichnet sich dadurch aus, dass sich an die dem Gegenmodulanschluss zugeordnete Öffnung ein in den Fluidkanal eingebrachtes Innengewinde anschließt.

Vorteilhaft wird damit - zusätzlich zu dem Modul- oder Gegenmodulanschluss - eine weitere Anschlussmöglichkeit geschaffen, um eine Fluidverbindung mit dem Ventilkörper herzustellen.

Ein vorteilhaftes Beispiel zeichnet sich dadurch aus, dass das wenigstens eine Verriegelungselement eine Rastnase aufweist, um mit einem zugeordneten Rastprofil eines Verriegelungsnutenbodens der zugeordneten Verriegelungsnut des Modulanschlusses des ersten Ventilkörpers wenigstens eine oder mehrere Rastpositionen des ersten und zweiten Ventilkörpers zueinander zu bestimmen.

Vorteilhaft wird dem Monteur durch die wenigstens eine Rastposition eine haptische Rückmeldung über das baldige Erreichen der Verriegelungsposition gegeben.

Ein vorteilhaftes Beispiel zeichnet sich dadurch aus, dass die Rastnase in einer Drehposition der beiden Ventilkörper zueinander auf einen Begrenzungsanschlag des Verriegelungsnutenbodens der wenigstens einen Verriegelungsnut des Modulanschlusses des ersten Ventilkörpers trifft.

Vorteilhaft kann damit eine Rastposition definiert werden, in der eine weitere Verdrehung der Ventilkörper zueinander nicht mehr möglich ist.

Ein vorteilhaftes Beispiel zeichnet sich dadurch aus, dass ein als zylindrischer Vorsprung ausgebildeter Abschnitt an seiner Außenseite den Gegendichtabschnitt, insbesondere mittels eines in einer Außennut aufgenommenen elastischen O-Rings, bereitstellt.

Vorteilhaft bildet der zylindrische Vorsprung nicht nur einen Teil der Abdichtung nach außen, sondern stellt auch für die Steckbewegung eine koaxiale Führung von Modulanschluss und Gegenmodulanschluss bereit.

Ein dritter Aspekt der Beschreibung betrifft den folgenden Gegenstand: Ein modular aufgebauter Ventilblock umfassend wenigstens den ersten Ventilkörper gemäß dem ersten Aspekt und den zweiten Ventilkörper gemäß dem zweiten Aspekt, wobei der Modulanschluss und der Gegenmodulanschluss den ersten Ventilkörper und den zweiten Ventilkörper fluidführend miteinander verbindet.

Ein vierter Aspekt der Beschreibung betrifft den folgenden Gegenstand: Ein Verfahren zum Verbinden einer Mehrzahl von Ventilkörpern wobei ein erster der Ventilkörper zumindest einen Modulanschluss und ein zweiter der Ventilkörper einen Gegenmodulanschluss umfasst, wobei der Modulanschluss eine Öffnung eines Fluidkanals des ersten Ventilkörpers umgibt, und wobei der Gegenmodulanschluss eine Öffnung des zweiten Ventilkörpers umgibt und in einen Fluidkanal des zweiten Ventilkörpers führt, das Verfahren umfassend: Aufeinanderzubewegen des Modulanschlusses und des Gegenmodulanschlusses entlang einer gedachten Steckachse wodurch wenigstens ein Verriegelungselement des Gegenmodulanschlusses durch eine zugeordnete Freisparung des Modulanschlusses geführt wird, wobei das wenigstens eine Verriegelungselement des Gegenmodulanschlusses nach dem Passieren der Freisparung in einer gedachten zur Steckachse lotrechten Drehverriegelungsebene, in welcher wenigstens eine Verriegelungsnut des Modulanschlusses verläuft, angeordnet wird, und wobei durch das Aufeinanderzubewegen eine mechanische Spannung zwischen einem Dichtabschnitt des ersten Ventilkörpers und einem Gegendichtabschnitt des zweiten Ventilkörpers zum Erreichen einer Dichtwirkung nach außen erhöht wird; und Rotieren des Modulanschlusses und des Gegenmodulanschlusses gegeneinander um die Steckachse, wobei das wenigstens eine Verriegelungselement des Gegenmodulanschlusses in der Drehverriegelungsebene bewegt wird, um in die wenigstens eine zugeordnete Verriegelungsnut des Modulanschlusses einzugreifen.

In der Zeichnung zeigen:
- Fig. 1: eine Draufsicht auf einen Modulanschluss eines ersten Ventilkörpers;
- Fig. 2: eine Draufsicht auf einen Gegenmodulanschluss eines zweiten Ventilkörpers;
- Fig. 3: die zwei miteinander verbundenen ersten und zweiten Ventilkörper in einer perspektivischen Ansicht;
- Fig. 4: die zwei miteinander verbundenen ersten und zweiten Ventilkörper in einer weiteren perspektivischen Ansicht; und
- Fig. 5: ein schematisches Ablaufdiagramm.

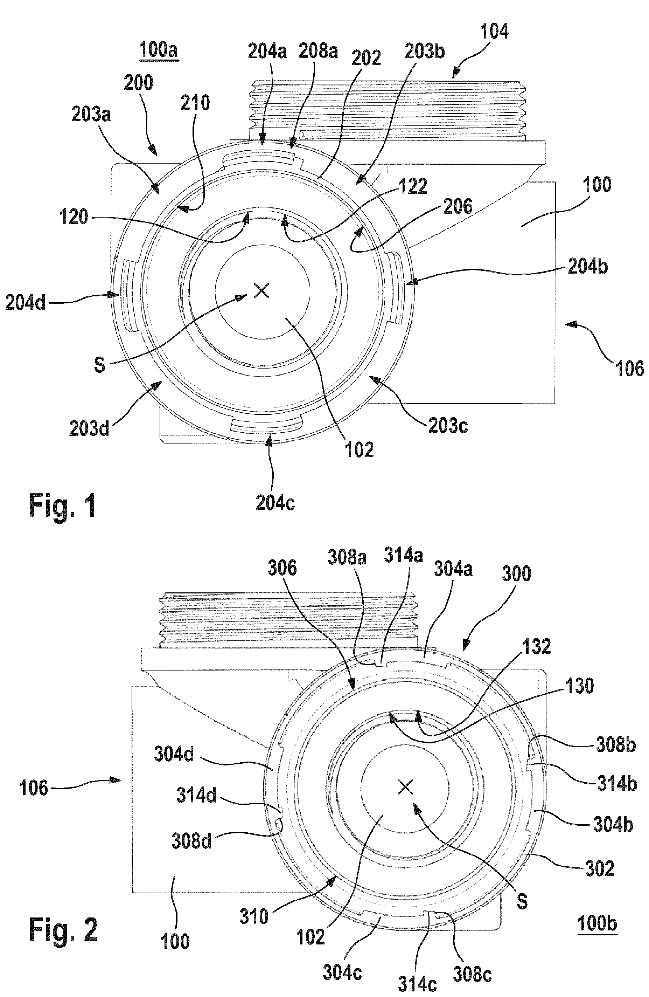

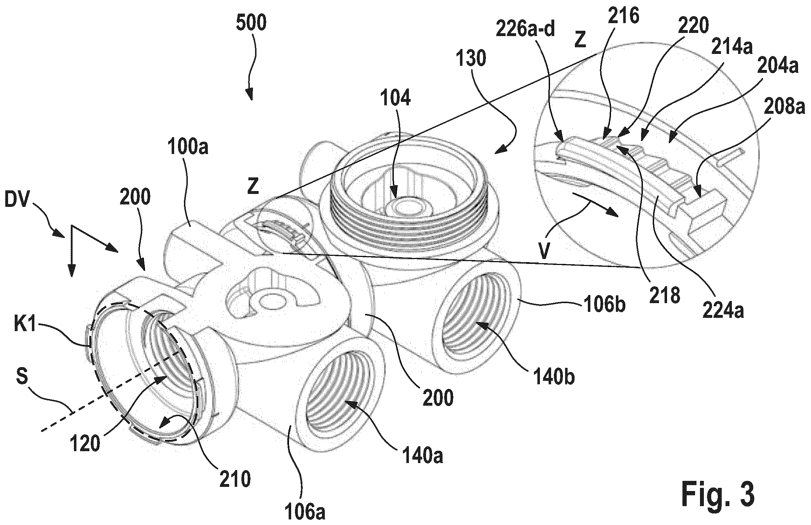

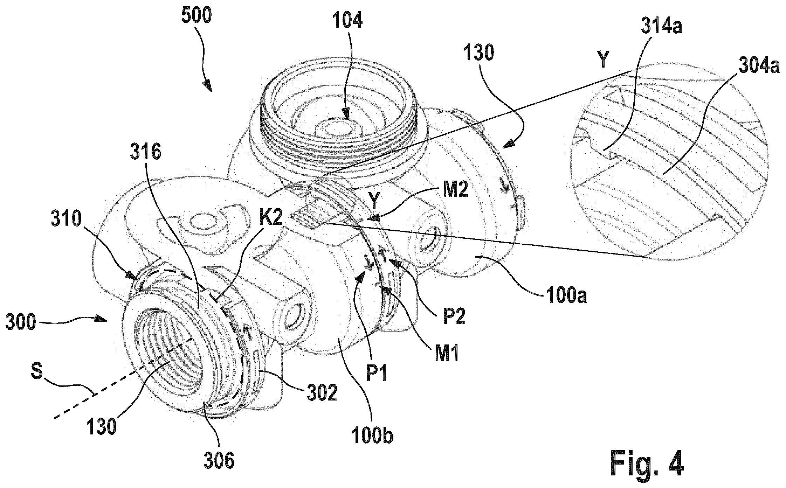

In den Figuren 1 und 2 werden in einer jeweiligen Draufsicht auf einen Modulanschluss 200 eines modularen ersten Ventilkörpers 100a und auf einen Gegenmodulanschluss 300 eines modularen zweiten Ventilkörpers 100b die Mechanismen zur modularen Verbindung der beiden Ventilkörper 100a-b erläutert. Weitergehend dienen die Figuren 3 und 4 zur näheren Erläuterung der Details des Modulanschlusses 200 und des Gegenmodulanschlusses 300.

Sowohl der Ventilkörper 100a als auch der Ventilkörper 100b umfassen wenigstens einen inneren Fluidkanal 102, welcher wenigstens zwei Öffnungen 120, 130 des jeweiligen Ventilkörpers 100a-b fluidführend miteinander verbindet.

Wenigstens eine der Öffnungen 120, 130 wird von dem Modulanschluss 200 umgeben, wobei der Modulanschluss 200 umfasst: wenigstens eine Freisparung 203a-d, durch welche wenigstens ein Verriegelungselement 304a-d des Gegenmodulanschlusses 300 des zweiten Ventilkörpers 100b parallel zu einer Steckachse S in eine gedachte zur Steckachse S lotrechte Drehverriegelungsebene DV bewegbar ist; und wenigstens eine in der Drehverriegelungsebene DV verlaufende Verriegelungsnut 204a-d, in die das zugeordnete wenigstens eine Verriegelungselement 304a-d nach einer relativen Rotation des Modulanschlusses 200 und des Gegenmodulanschlusses 300 zueinander eingreift, um den ersten und zweiten Ventilkörper 100a-b entlang der Steckachse S und rotativ um die Steckachse S zueinander festzulegen.

Die wenigstens eine Freisparung 203a-d ist entlang eines gedachten Kreises K1 angeordnet. Ein gedachter Mittelpunkt des gedachten Kreises K1 liegt auf der gedachten Steckachse S. Der Kreis K1 liegt in einer gedachten lotrecht zur Steckachse S verlaufenden Ebene.

Der gezeigte Ventilkörper 100a-b zeichnet sich dadurch aus, dass der innere Fluidkanal 102 ein Hauptkanal ist, und die dem Modulanschluss 200 zugeordnete Öffnung 120 und die dem Gegenmodulanschluss 300 zugeordnete Öffnung 130 fluidführend miteinander verbindet, und dass ein Abzweig von dem Hauptkanal über einen Ventilsitz 104 zu einem Abzweiganschluss 106 führt.

Der Hauptkanal erstreckt sich im Beispiel entlang der Steckachse S, welche vorliegend mit der jeweiligen Zentralachse des Modulanschlusses 200 und des Gegenmodulanschlusses 300 des Ventilkörpers 100 zusammenfällt. Selbstverständlich kann in anderen Ausführungsformen der Hauptkanal auch anders verlaufen.

In Figur 3 sind Ausgänge 140a-b des jeweiligen Abzweiganschlusses 106a-b gezeigt, die vom Hauptkanal abzweigen. Mittels eines nicht gezeigten Absperrorgans, welches von einem Antrieb auf den Sitz 104 zu oder von ihm wegbewegt wird, ist ein Prozessfluid-Fluss zwischen dem Hauptkanal und dem zugeordeten Ausgang 140a-b steuer- und/oder regelbar.

Die Verriegelungsnuten 204a-d sind im gezeigten Beispiel an einem zylindrischen Bund 202 angeordnet.

Der Modulanschluss 200 umfasst also den zylindrischen Bund 202 mit einer Mehrzahl von im Beispiel gezeigten entlang einer Umfangsrichtung verteilten Verriegelungsnuten 204a-d zum Eingriff einer Mehrzahl von Verriegelungselementen 304a-d des Gegenmodulanschlusses 300 des zweiten Ventilkörpers 100b.

Der Modulanschluss 200 umfasst wenigstens einen, insbesondere nur einen einzigen Begrenzungsanschlag 208a zum Begrenzen der Drehbewegung, welcher mit wenigstens einem Gegenbegrenzungsanschlag 308a-d des Gegenmodulanschlusses 300 des zweiten Ventilkörpers 100b zusammenwirkt, um eine Verriegelungsposition des Modulanschlusses 200 zu dem Gegenmodulanschluss 300 des zweiten Ventilkörpers 100b sicherzustellen.

Im gezeigten Beispiel sind mehrere Gegenbegrenzungsanschläge 308a-d vorgesehen, die jeweils mit einem der Begrenzungsanschläge 208a-d zusammenwirken und die Drehbewegung begrenzen. Vorliegend sind jeweils vier Gegenbegrenzungsanschläge 308a-d und vier Begrenzungsanschläge 208a-d in Umfangsrichtung äquidistant zueinander angeordnet. Damit wird ermöglicht, dass die Ventilkörper 100a und 100b in vier um 90° zueinander versetzten Relativpositionen miteinander verbunden werden können.

In einem nicht gezeigten Beispiel ist vorgesehen, eine Mehrzahl von Gegenbegrenzungsanschlägen, also beispielsweise vier Gegenbegrenzungsvorschlägen 308a-d in der vorangenannten äquidistanten Beabstandung, vorzusehen und nur einen einzigen Begrenzungsanschlag 208a.

In einem weiteren Beispiel ist vorgesehen, eine Mehrzahl von Begrenzungsanschlägen vorzusehen und eine Mehrzahl von Gegenbegrenzungsanschlägen, wobei die Anzahl der Begrenzungsanschläge kleiner als die oder gleich der Anzahl der Gegenbegrenzungsanschläge ist.

Als Material für den Ventilkörper 100a-b kommt beispielsweise ein Polyolefin, insbesondere Polypropylen, insbesondere ein Polypropylen-Homopolymer zum Einsatz.

Der Ventilkörper 100a bzw. der Modulanschluss 300 umfasst einen Dichtabschnitt 210, welcher sich zwischen der dem Modulanschluss 200 zugeordneten Öffnung 120 und dem Modulanschluss 200 befindet, und welcher bei einem relativen Aufeinanderzubewegen des ersten Ventilkörpers 100a und des zweiten Ventilkörpers 100b entlang der gedachten Steckachse S in Kontakt mit einem Gegendichtabschnitt 310 des zweiten Ventilkörpers 100b kommt.

Der gezeigte Dichtabschnitt 210 realisiert auch die Funktion eines Führungsabschnitts zur Ermöglichung einer axialen Führung von erstem und zweitem Ventilkörper 100a-b, zur Ermöglichung einer Drehbewegung des zylindrischen Außenbunds 202 relativ zum Gegenmodulanschluss 300 des zweiten Ventilkörpers 100b, wobei durch die Drehbewegung die Verriegelungselemente 304a-d in die zugeordneten Verriegelungsnuten 204a-d des zylindrischen Bundes 202 einfahren.

Der Dichtabschnitt 210 zum Zusammenwirken mit dem Gegendichtabschnitt 310 des Gegenmodulanschlusses 300 des zweiten Ventilkörpers 100b ist vorgesehen, um wenigstens in der Verriegelungsposition ein fluiddichtes Abdichten nach außen sicherzustellen.

Der Gegendichtabschnitt 310 ist beispielsweise als nicht gezeigter Elastomerdichtring ausgeführt, der in die nach außen geöffnete Außennut 316 eingebracht ist. Damit wird ein zylindermantelförmiger Dichtbereich bereitgestellt. Der Gegendichtabschnitt 310 bildet mit dem Dichtabschnitt 210 also eine Dichtfläche aus, die sich parallel zur Steckachse S erstreckt.

Alternativ oder zusätzlich zu dem gezeigten Dichtabschnitt 210 und dem gezeigten Gegendichtabschnitt 310 kann die Abdichtung nach außen auch über eine Dichtfläche erfolgen, welche in einer zur Steckachse S lotrechten Ebene verläuft. Dabei wird ein Elastomer-Dichtring beispielsweise in eine kreisringförmige Nut eingebracht, welche sich in eine parallel zur Steckachse S verlaufende Richtung öffnet. Dieser Dichtring wird dann auf eine Fläche gedrückt, die in einer zur Steckachse S lotrechten Ebene verläuft.

Eine Mehrzahl von Verriegelungsnuten 204a-d, insbesondere vier Verriegelungsnuten 204a-d, sind in Umfangsrichtung, insbesondere äquidistant, zueinander beabstandet, wobei lediglich die Verriegelungsnut 204a bis einem Rastprofil 214a versehen ist und die übrigen Verriegelungsnuten 204b-c kein Rastprofil aufweisen, jedoch für eine axiale Verriegelung sorgen.

An die dem Modulanschluss 200 zugeordnete Öffnung 120 schließt sich ein in den Fluidkanal 102 eingebrachtes Innengewinde 122 an.

In Figur 3 ist gezeigt, dass wenigstens ein Verriegelungsnutenboden der wenigstens einen Verriegelungsnut 204a-d ein Rastprofil 214a aufweist, um mit einer der Mehrzahl von Rastnases 314a-d des wenigstens einen Verriegelungselements 304a-d des Gegenmodulanschlusses 300 des zweiten Ventilkörpers 100b wenigstens eine oder mehrere Rastpositionen des ersten und zweiten Ventilkörpers 100a-b zueinander zu definieren.

Das Rastprofil 214a ist im Beispiel nur einmal vorhanden, wobei die übrigen Verriegelungsnuten 204b-d kein Rastprofil aufweisen. Dadurch werden vier Rastpositionen vorgegeben, wobei die letzte Rastposition in Richtung Begrenzungsanschlag 208a-d die jeweilige finale Verriegelungsposition definiert.

Der Begrenzungsanschlag 208a begrenzt wenigstens eine der Verriegelungsnuten 204a-d, insbesondere der Verriegelungsnut 204a endseitig.

Das Rastprofil 214a definiert eine jeweilige Rastposition durch eine eher steil ansteigende Fläche 218, an die sich entgegen der Richtung des Begrenzungsanschlags 208a eine eher flach ansteigende Fläche 216 anschließt. Die benachbarten Rastpositionen zugeordneten flach ansteigenden und die steil absteigenden Flächen 216, 218 sind durch eine abgerundete Kante 220 miteinander verbunden, so dass bei genügend manuell in den Gegenmodulanschluss 300 eingebrachter Kraft entgegen einer Verriegelungsrichtung V die Verriegelungsposition der beiden Ventilkörper 100a-b zueinander verlassen wird und die Ventilkörper 100a-b demontiert werden können.

Nach vollständiger Verdrehung zur Verbindung der Ventilkörper 100a-b befindet sich die Rastnase 314a-d in der letzten Rastposition vor dem Anschlag, d.h. die Rastnase 314a-d wird über die letzte abgerundete Kante geschoben und fällt in die tiefste Stelle, also den Übergang zwischen der steil abfallenden Fläche und der flach ansteigenden Fläche. Für ein weiteres Verdrehen müsste Kraft aufgebracht werden und die weitere Verdrehung würde durch den Anschlag begrenzt sein, sodass die Rastnase 314a-d nach Wegnehmen der Kraft wieder in die vorangehend beschriebene Rastposition rutschen würde. Im gezeigten Beispiel indiziert eine äußere Markierung eine Drehrichtung zum Erreichen der Verriegelungsposition und/oder ein Erreichen der Verriegelungsposition. Vorteilhaft wird eine Montage erleichtert und eine Fehlmontage verhindert. Liegen zwei Pfeile im Sinne der Markierungen des Modulanschlusses und des Gegenmodulanschlusses benachbart nebeneinander, so indiziert dies, dass eine Drehung erfolgen muss, um aus der verriegelten Position der beiden Ventilkörper 100a-b in eine unverriegelte Position zu gelangen. Liegen zwei Striche im Sinne der Markierungen benachbart nebeneinander, so indiziert dies, dass die beiden Ventilkörper entlang der Steckachse S relativ zueinander bewegbar sind.

Eine Außenwandung 224a-d der jeweiligen Verriegelungsnut 204a-d weist zumindest abschnittsweise eine von der Verriegelungsnut 204a-d wegweisende Verdickung auf. Die Funktion dieser Außenwandung 224a-d ist das Begrenzen der axialen Verschiebung der Rastnase 314a-d bzw. des Verriegelungselements 304a-d, womit die Außenwandung 224a-d gemeinsam mit dem Verriegelungselement 304a-d eine axiale Verriegelungsfunktion realisiert.

Die Außenwandung 224a-d umfasst insbesondere im Bereich der Verdickung eine Einführkontur 226a-d auf der dem jeweiligen Begrenzungsanschlag 208a entgegengesetzten Bereich. Im gezeigten Beispiel ist die Einführkontur 226a-d als konvexe Freiformfläche ausgeführt. In einem anderen Beispiel kann die Einführkontur 226a-d auch als flache Schräge oder andersartig ausgebildet sein. Damit wird das Einführen der Verriegelungselemente 314a-d in die Verriegelungsnut 204a-d erleichtert und damit die Montage verbessert.

Der Dichtabschnitt 210 folgt einem gedachten Zylindermantel, dessen Zylinderachse mit der gedachten Steckachse S zusammenfällt.

Der Dichtabschnitt 210 kann als Dichtring oder, wie im Beispiel gezeigt, als innenzylindrische Dichtwandung vorgesehen sein. Vorteilhaft kann so bauraumoptimiert die Abdichtung nach außen und die Verbindung mit dem zweiten Ventilkörper realisiert werden.

Der als Führungsabschnitt ausgebildete Dichtabschnitt 210 stellt sicher, dass der Modulanschluss 200 und der Gegenmodulanschluss 300 der Ventilkörper 100a-b koaxial ausgerichtet sind, so dass die Zentralachsen des Modulanschlusses 200 und des Gegenmodulanschlusses 300 in der gedachten Steckachse S zusammenfallen. Damit kann eine geführte Steckbewegung durchgeführt werden und durch den einen Drehfreiheitsgrad kann die Verriegelungsposition erreicht werden.

Der Gegenmodulanschluss 300 des zweiten Ventilkörpers 100b umfasst das wenigstens eine Verriegelungselement 304a-d, welches durch die wenigstens eine Freisparung 203a-d des Modulanschlusses 200 des modularen ersten Ventilkörpers 100a parallel zu der Steckachse S in die gedachte zur Steckachse S lotrechte Drehverriegelungsebene DV bewegbar ist, wobei das wenigstens eine Verriegelungselement 304a-d nach einer relativen Rotation des Gegenmodulanschlusses 300 und des Modulanschlusses 200 zueinander in die zugeordnete Verriegelungsnut 204a-b des Modulanschlusses 200 eingreift, um den ersten und zweiten Ventilkörper 100a-b entlang der Steckachse S und rotativ um die Steckachse S zueinander festzulegen.

Das wenigstens eine Verriegelungselement 304a-d ist entlang eines gedachten Kreises K2 angeordnet. Ein gedachter Mittelpunkt des Kreises K2 liegt auf der gedachten Steckachse S. Der Kreis K2 liegt in einer gedachten lotrecht zur Steckachse S verlaufenden Ebene.

Der Gegenmodulanschluss 300 umfasst eine zylindrische Hülse 302 mit den entlang einer Umfangsrichtung verteilten Verriegelungselementen 304a-d zum Eingriff in die Verriegelungsnuten 204a-d des Modulanschlusses 200 des ersten Ventilkörpers 100a.

Der Gegenmodulanschluss 300 umfasst einen Abschnitt 306 zur Ermöglichung einer Drehbewegung der zylindrischen Hülse 302 relativ zum Modulanschluss 200 des ersten Ventilkörpers 100a und zum Unterstützen des Einfahrens der Verriegelungselemente 304a-d in die zugeordneten Verriegelungsnuten 204a-d durch die geführte Steck-Drehbewegung.

Der Gegenmodulanschluss 300 umfasst den Gegenbegrenzungsanschlag 308a-d zum Begrenzen der Drehbewegung, wobei einer der Gegenbegrenzungsanschläge 304a-d mit dem Begrenzungsanschlag 208a des Modulanschlusses 200 des ersten Ventilkörpers 100b zusammenwirkt, um eine Verriegelungsposition des Gegenmodulanschlusses 300 zu dem Modulanschluss 200 des ersten Ventilkörpers 100a sicherzustellen.

Es ist der Gegendichtabschnitt 310 vorgesehen, welcher sich zwischen der dem Gegenmodulanschluss 300 zugeordneten Öffnung 130 und dem Gegenmodulanschluss 300 befindet, welcher bei einem relativen Aufeinanderzubewegen des ersten Ventilkörpers 100a und des zweiten Ventilkörpers 100b entlang der gedachten Steckachse S in Kontakt mit dem Dichtabschnitt 210 kommt, um eine fluiddichte Abdichtung des durch Verbindung der beiden Fluidkanäle der beiden Ventilkörper 100a-b entstehenden Fluidkanals nach außen bereitzustellen.

Eine Mehrzahl von Verriegelungselementen 304a-d, insbesondere vier Verriegelungselemente 304a-d, sind in Umfangsrichtung, insbesondere äquidistant zueinander beabstandet.

Die zylindrischen Hülse 302 des Ventilkörpers 100b trägt die Mehrzahl von Verriegelungselementen 304a-d, die nach innen von der Hülse 302 abragen.

An die dem Gegenmodulanschluss 300 zugeordnete Öffnung 130 schließt sich ein in den Fluidkanal 102 eingebrachtes Innengewinde 132 an.

In Figur 4 ist gezeigt, dass das wenigstens eine Verriegelungselement 304a-d die Rastnase 314a-d aufweist, um mit dem in Figur 3 gezeigten zugeordneten Rastprofil 214a des Verriegelungsnutenbodens der zugeordneten Verriegelungsnut 204a-d des Modulanschlusses 200 des ersten Ventilkörpers 100a wenigstens eine oder mehrere Rastpositionen des ersten und zweiten Ventilkörpers 100a-b zueinander zu bestimmen.

Es ist vorgesehen, dass die Rastnase 314a-d in einer Drehposition der beiden Ventilkörper 100a-b zueinander auf den Begrenzungsanschlag 208a des Verriegelungsnutenbodens der wenigstens einen Verriegelungsnut 204a-d des Modulanschlusses 200 des ersten Ventilkörpers 100a trifft.

Im Beispiel ist gezeigt, dass der als zylindrischer Vorsprung ausgebildete Abschnitt 306, welcher radial innerhalb der zylindrischen Hülse 302 angeordnet ist, an seiner Außenseite den Gegendichtabschnitt 310, insbesondere mittels eines in einer Außennut 316 aufgenommenen elastischen O-Rings, bereitstellt.

Bei der Anordnung der Ventilkörper 100a-b aneinander wird zuerst die Steckbewegung durchgeführt, bei der die Verriegelungselemente 304a-b durch die Freisparungen hindurchtauchen. Vor der Verdrehung liegen zwei Markierungen M1 und M2 so zueinander, dass sie in einer gemeinsamen gedachten Linie liegen. Nach der Verdrehung der beiden Ventilkörper 100a-b zueinander wird der in Figur 4 gezeigte Zustand erreicht. Zwei benachbart angeordnete Pfeile P1, P2 auf der Außenseite der jeweiligen Ventilkörper 100ab zeigen dem Monteur an, in welche Drehrichtungen die beiden Ventilkörper 100a-b relativ gegeneinander verdreht werden müssen, um miteinander verbunden zu werden.

Die Figuren 3 und 4 zeigen also einen modular aufgebauten Ventilblock 500 umfassend die beiden Ventilkörper 100a-b. Selbstverständlich können beliebig viele Ventilkörper mittels der hier beschriebenen Verbindungstechnik fluidführend miteinander verbunden werden.

Der erste der Ventilkörper 100a umfasst den zumindest einen Modulanschluss 200 und der zweite der Ventilkörper 100b umfasst den zumindest einen Gegenmodulanschluss 300, wobei der Modulanschluss 200 die Öffnung 120 des Fluidkanals 102 des ersten Ventilkörpers 100a umgibt, und wobei der Gegenmodulanschluss 300 die Öffnung 130 des Fluidkanals des zweiten Ventilkörpers 100b umgibt.

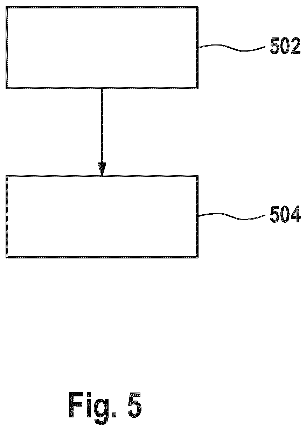

Figur 5 zeigt unter Bezugnahme auf die vorigen Figuren und deren Bezugszeichen ein Verfahren zum Verbinden einer Mehrzahl von Ventilkörpern 100a-b.

Das Verfahren umfasst gemäß einem Schritt 502 ein Aufeinanderzubewegen Modulanschlusses 200 und des Gegenmodulanschlusses 300 entlang der gedachten Steckachse S, wodurch das wenigstens eine Verriegelungselement 304a-d des Gegenmodulanschlusses 300 durch die zugeordnete Freisparung 203a-d des Modulanschlusses 200 geführt wird, wobei das wenigstens eine Verriegelungselement 304a-d des Gegenmodulanschlusses 300 nach dem Passieren der Freisparung 203a-d in der gedachten zur Steckachse S lotrechten Drehverriegelungsebene DV, in welcher die wenigstens eine Verriegelungsnut 204a-d des Modulanschlusses 200 verläuft, angeordnet wird, und wobei durch das Aufeinanderzubewegen eine mechanische Spannung zwischen dem Dichtabschnitt 210 des ersten Ventilkörpers 100a und dem Gegendichtabschnitt 310 des zweiten Ventilkörpers 100b zum Erreichen einer Dichtwirkung nach außen erhöht wird.

Das Verfahren umfasst gemäß dem Schritt 504, nach dem Aufeinanderzubewegen 502, ein Rotieren des Modulanschlusses 200 und des Gegenmodulanschlusses 300 gegeneinander um die Steckachse S, wobei das wenigstens eine Verriegelungselement 304a-d des Gegenmodulanschlusses 300 in der Drehverriegelungsebene DV bewegt wird, um in die wenigstens eine zugeordnete Verriegelungsnut 204a-d des Modulanschlusses 200 einzugreifen.

## Patentansprüche

1. Ein modularer erster Ventilkörper (100a) für ein Prozessventil umfassend: wenigstens einen inneren Fluidkanal (102), welcher wenigstens zwei Öffnungen (120, 130) des Ventilkörpers (100a) fluidführend miteinander verbindet; und wenigstens einen eine der Öffnungen (120) umgebenden Modulanschluss (200), wobei der Modulanschluss (200) umfasst:
- wenigstens eine Freisparung (203a-d), durch welche wenigstens ein Verriegelungselement (304a-d) eines Gegenmodulanschlusses (300) eines zweiten Ventilkörpers (100b) parallel zu einer Steckachse (S) in eine gedachte zur Steckachse (S) lotrechte Drehverriegelungsebene (DV) bewegbar ist; und
- wenigstens eine in der Drehverriegelungsebene (DV) verlaufende Verriegelungsnut (204a-d), in die das zugeordnete wenigstens eine Verriegelungselement (304a-d) nach einer relativen Rotation des Modulanschlusses (200) und des Gegenmodulanschlusses (300) zueinander eingreift, um den ersten und zweiten Ventilkörper (100a-b) entlang der Steckachse (S) zueinander festzulegen.

2. Der modulare erste Ventilkörper (100a) gemäß dem Anspruch 1 umfassend:
- wenigstens einen Dichtabschnitt (210) welcher bei einem relativen Aufeinanderzubewegen des ersten Ventilkörpers (100a) und des zweiten Ventilkörpers (100b) entlang der gedachten Steckachse (S) in Kontakt mit einem Gegendichtabschnitt (310) des zweiten Ventilkörpers (100b) kommt.

3. Der modulare erste Ventilkörper (100a) gemäß dem Anspruch 1 oder 2, wobei eine Mehrzahl von Verriegelungsnuten (204a-d), insbesondere vier Verriegelungsnuten (204a-d), in einer Umfangsrichtung, insbesondere äquidistant, zueinander beabstandet sind.

4. Der modulare erste Ventilkörper (100a) gemäß einem der vorigen Ansprüche, wobei sich an die dem Modulanschluss (200) zugeordnete Öffnung (120) ein in den Fluidkanal (102) eingebrachtes Innengewinde (122) anschließt.

5. Der modulare erste Ventilkörper (100a) gemäß einem der vorigen Ansprüche, wobei ein Verriegelungsnutenboden der wenigstens einen Verriegelungsnut (204a-d) ein Rastprofil (214a) aufweist, um mit einer zugeordneten Rastnase (314a-d) des wenigstens einen Verriegelungselements (304a-d) des Gegenmodulanschlusses (300) des zweiten Ventilkörpers (100b) wenigstens eine oder mehrere Rastpositionen des ersten und zweiten Ventilkörpers (100a-b) zueinander zu definieren.

6. Der modulare erste Ventilkörper (100a) gemäß dem vorigen Anspruch, wobei der Begrenzungsanschlag (208a) wenigstens eine der Verriegelungsnuten (204a-d) endseitig begrenzt.

7. Ein modularer zweiter Ventilkörper (100b) für ein Prozessventil umfassend:
wenigstens einen inneren Fluidkanal (102), welcher wenigstens zwei Öffnungen (130, 120) des Ventilkörpers (100b) miteinander verbindet; und wenigstens einen eine der Öffnungen (130) umgebenden Gegenmodulanschluss (300), wobei der Gegenmodulanschluss (300) umfasst:
- wenigstens ein Verriegelungselement (304a-d), welches durch eine Freisparung (203a-d) eines Modulanschlusses (200) eines modularen ersten Ventilkörpers (100a) parallel zu einer Steckachse (S) in eine gedachte zur Steckachse (S) lotrechte Drehverriegelungsebene (DV) bewegbar ist, wobei das wenigstens eine Verriegelungselement (304a-d) nach einer relativen Rotation des Gegenmodulanschlusses (300) und des Modulanschlusses (200) zueinander in eine zugeordnete Verriegelungsnut (204a-b) des Modulanschlusses (200) eingreift, um den ersten und zweiten Ventilkörper (100a-b) entlang der Steckachse (S) zueinander festzulegen.

8. Der modulare zweite Ventilkörper (100b) gemäß dem Anspruch 7 umfassend:
- wenigstens einen Gegendichtabschnitt (310) welcher bei einem relativen Aufeinanderzubewegen des ersten Ventilkörpers (100a) und des zweiten Ventilkörpers (100b) entlang der gedachten Steckachse (S) in Kontakt mit einem Dichtabschnitt (210) des ersten Ventilkörpers (100a) kommt, um eine fluiddichte Abdichtung nach außen bereitzustellen.

9. Der modulare zweite Ventilkörper (100b) gemäß dem Anspruch 7 oder 8, wobei eine Mehrzahl von Verriegelungselementen (304a-d), insbesondere vier Verriegelungselemente (304a-d), in Umfangsrichtung äquidistant zueinander beabstandet sind.

10. Der modulare zweite Ventilkörper (100b) gemäß einem der Ansprüche 7 bis 8, wobei sich an die dem Gegenmodulanschluss (300) zugeordnete Öffnung (130) ein in den Fluidkanal (102) eingebrachtes Innengewinde (132) anschließt.

11. Der modulare zweite Ventilkörper (100b) gemäß einem der Ansprüche 7 bis 10, wobei das wenigstens eine Verriegelungselement (304a-d) eine Rastnase (314a-d) aufweist, um mit einem zugeordneten Rastprofil (214a-d) eines Verriegelungsnutenbodens der zugeordneten Verriegelungsnut (204a-d) des Modulanschlusses (200) des ersten Ventilkörpers (100a) wenigstens eine oder mehrere Rastpositionen des ersten und zweiten Ventilkörpers (100a-b) zueinander zu bestimmen.

12. Der modulare zweite Ventilkörper (100b) gemäß dem vorigen Anspruch, wobei die Rastnase (314a-d) in einer Drehposition der beiden Ventilkörper (100a-b) zueinander auf einen Begrenzungsanschlag (208a) des Verriegelungsnutenbodens der wenigstens einen Verriegelungsnut (204a-d) des Modulanschlusses (200) des ersten Ventilkörpers (100a) trifft.

13. Der modulare zweite Ventilkörper (100b) gemäß einem der Ansprüche 7 bis 12, wobei ein als zylindrischer Vorsprung ausgebildeter Abschnitt (306) an seiner Außenseite den Gegendichtabschnitt (310), insbesondere mittels eines in einer Außennut (316) aufgenommenen elastischen O-Rings, bereitstellt.

14. Ein modular aufgebauter Ventilblock (500) umfassend wenigstens den ersten Ventilkörper (100a) gemäß einem der Ansprüche 1 bis 6 und den zweiten Ventilkörper (100b) gemäß einem der Ansprüche 7 bis 12, wobei der Modulanschluss (200) und der Gegenmodulanschluss (300) den ersten Ventilkörper (100a) und den zweiten Ventilkörper (100b) fluidführend miteinander verbindet.

15. Ein Verfahren zum Verbinden einer Mehrzahl von Ventilkörpern (100a-b), wobei ein erster der Ventilkörper (100a) zumindest einen Modulanschluss (200) und ein zweiter der Ventilkörper (100b) einen Gegenmodulanschluss (300) umfasst, wobei der Modulanschluss (200) eine Öffnung (120) eines Fluidkanals des ersten Ventilkörpers (100a) umgibt, und wobei der Gegenmodulanschluss (300) eine Öffnung (130) eines Fluidkanals des zweiten Ventilkörpers (100b) umgibt, das Verfahren umfassend:
- Aufeinanderzubewegen (502) des Modulanschlusses (200) und des Gegenmodulanschlusses (300) entlang einer gedachten Steckachse (S), wodurch wenigstens ein Verriegelungselement (304a-d) des Gegenmodulanschlusses (300) durch eine zugeordnete Freisparung (203a-d) des Modulanschlusses (200) geführt wird, wobei das wenigstens eine Verriegelungselement (304a-d) des Gegenmodulanschlusses (300) nach dem Passieren der Freisparung (203a-d) in einer gedachten zur Steckachse (S) lotrechten Drehverriegelungsebene (DV), in welcher wenigstens eine Verriegelungsnut (204a-d) des Modulanschlusses (200) verläuft, angeordnet wird, und wobei durch das Aufeinanderzubewegen (502) eine mechanische Spannung zwischen einem Dichtabschnitt (210) des ersten Ventilkörpers (100a) und einem Gegendichtabschnitt (310) des zweiten Ventilkörpers (100b) zum Erreichen einer Dichtwirkung nach außen erhöht wird; und
- Rotieren (504) des Modulanschlusses (200) und des Gegenmodulanschlusses (300) gegeneinander um die Steckachse (S), wobei das wenigstens eine Verriegelungselement (304a-d) des Gegenmodulanschlusses (300) in der Drehverriegelungsebene (DV) bewegt wird, um in die wenigstens eine zugeordnete Verriegelungsnut (204a-d) des Modulanschlusses (200) einzugreifen.
